# EUROPEAN PATENT APPLICATION

(11) **EP 4 534 487 A1**
(43) Date of publication of application: **09.04.2025**
(21) Application number: 22944388.2
(22) Date of filing: 08.06.2022
(51) Int. Cl.: C02F 1/42, B01J 49/60, B01J 49/75

(54) **WATER SOFTENING STRUCTURE AND REGENERATION METHOD THEREFOR**

(30) Priority: 30.05.2022 CN 202210601430
(71) Applicant: Canature Health Technology Group Co., Ltd., Shanghai 201299 (CN); East China University of Science and Technology, Shanghai 200237 (CN)
(72) Inventor: SUN, Ying, Shanghai 201299 (CN); QU, Yaming, Shanghai 201299 (CN); WU, Yanyang, Shanghai 201299 (CN); HUANG, Dongming, Shanghai 201299 (CN); MA, Zhihui, Shanghai 201299 (CN)
(74) Representative: Bjerkén Hynell KB
(86) International application number: PCT/CN2022/097682
(87) International publication number: WO 2023/231062

(57) **Abstract**

A water softening structure, which is used in a water softener, and comprises: a first-stage water softening unit group, which includes A water softening units connected in parallel, and the first-stage water softening unit group is connected in series to a second-stage water softening unit group, wherein A ≥ 1; the second-stage water softening unit group, which includes B water softening units connected in parallel, wherein B ≥ 1; a controller, which can disconnect, according to adsorption amounts of the water softening units, a certain water softening unit needing to be regenerated, connect in parallel a regenerated water softening unit to the second-stage water softening unit group, and at the same time, control to connect in parallel a certain water softening unit in the second-stage water softening unit group to the first-stage water softening unit group; and a switching apparatus, which is connected to each water softening unit, and can control, according to a controller instruction, each water softening unit to be connected in parallel to or be disconnected from a certain water softening unit group, wherein all the water softening units simultaneously run and are separately regenerated. The water softening structure can uninterruptedly supply water, and can significantly improve the utilization rates of resin and a regenerant, so as to significantly reduce the regeneration frequency of a device, thereby saving on operation costs.

## Description

### TECHNICAL FIELD

The present disclosure relates to the field of water treatment, and in particular to a water softening structure that utilizes the principle of ion exchange; and a regeneration method for the water softening structure.

### BACKGROUND

Existing household water softeners achieve water softening and resin regeneration with single tank and multi-tank series connection (hereinafter referred to as a series process), or double tank and multi-tank parallel connection (hereinafter referred to as a parallel process).

A water softener mainly uses ion exchange resin for ion exchange, where calcium and magnesium ions in water are adsorbed by the resin, thus reducing water hardness. After the ion exchange resin reaches saturated, the resin needs to undergo a regeneration process to restore its softening capacity. Generally, a certain concentration of sodium chloride solution is used for the resin regeneration. When the hardness or daily consumption of household water in some regions is high, the water softeners, particularly small-sized water softeners installed at low location (installed under sinks), perform the regeneration process several times a day. In the series process, resin that is being regenerated does not affect water softening, in which case the softener is incapable of a 24-hour supply of soft water therein. In the parallel process, to satisfy a water softening requirement, resin needs to be regenerated frequently, resulting in a low resin utilization rate and wastes of both regenerant and water resources; moreover, the soft water obtained from the device is limited by the height of a resin bed, failing to provide soft water in a large flow rate. A large-sized water softener is usually used in the prior art and typically installed in an equipment room or equipment balcony (a large installation space), to satisfy the demand for a high flow rate of soft water in regions with high hardness water quality. However, the large size of the device makes it difficult to install in a place with a limited room.

### BRIEF SUMMARY

A series of concepts in a simplified form is introduced in this section Summary, and all the concepts are simplified prior art, which will be described in detail in the section Detailed Description of Embodiments. This Summary of the present disclosure is neither intended to define key features or necessary technical features of the claimed technical solutions, nor is it intended to determine the protection scope of the claimed technical solutions.

The technical problem to be solved by the present disclosure is to provide a water softening structure for use in regions with high hardness water quality, which is smaller in size relative to a prior-art device and can achieve a ceaseless supply of soft water. The present disclosure further provides a regeneration method for the water softening structure.

To solve the above technical problem, the present disclosure provides a water softening structure for a water softener, including:
a first-stage water softening unit group that includes A water softening units connected in parallel and that is connected in sequence to a second-stage water softening unit group, where A≥1;
the second-stage water softening unit group including B water softening units connected in parallel, where B≥1;
a controller, which can control a switching apparatus to disconnect a certain water softening unit needed to be regenerated according to adsorption amounts of the water softening units;
the control switching apparatus connects in parallel a regenerated water softening unit to the second-stage water softening unit group, and at the same time, control to connect in parallel a certain water softening unit in the second-stage water softening unit group to the first-stage water softening unit group; and
the switching apparatus, which is disposed at a main general water inlet and connected to each water softening unit respectively, can control, according to a controller instruction, each water softening unit to be connected in parallel to or be disconnected from a certain water softening unit group;
wherein all the water softening units simultaneously run and are separately regenerated.

Optionally, in the further improved water softening structure, the second-stage water softening unit group is used for supplemental softening of hardness leaked from the first-stage water softening unit group, and the number of water softening units in the second-stage water softening unit group is configured based on a water production condition of the first-stage water softening unit group.

Optionally, in the further improved water softening structure, the first-stage water softening unit group is used for softening high-hardness inlet water, the second-stage water softening unit group is used for supplemental softening of the inlet water, and the number of the water softening units in the first-stage water softening unit group is configured based on a water inlet condition. Exemplarily, the water inlet condition includes parameters such as water inlet flow rate and water quality that are used in this field to determine the number of the water softening units.

It should be noted that during initial use, water produced by the design of the first-stage water softening unit group of the present disclosure already meets a corresponding standard (at least meets the national standard). During subsequent use, the following two working conditions can be realized:
1. The second-stage water softening unit group passively performs a supplement to a hardness leakage from the first-stage water softening unit group. For example, the first-stage water softening unit group results in a water quality which can not meet the corresponding standard due to the need for regeneration or other reasons (a failure, inlet water exceeding a maximum design flow, or the like). In such case, the second-stage water softening unit group acts as a backup for the first-stage water softening unit group to perform supplemental softening.
2. The switching apparatus is controlled to actively allow the first-stage water softening unit group to produce water with a certain degree of hardness. In such case, the second-stage water softening unit group does not act as a backup for the first-stage water softening unit group, and instead, the first-stage water softening unit group is actively used to prolong working time as much as possible for achieving full use, thus increasing the utilization rate of resin and regenerant. In such the working condition, water produced from the first-stage water softening unit group is allowed to have a degree of hardness, and then the second-stage water softening unit group performs supplemental softening.

Optionally, in the further improved water softening structure, the water softening unit is a resin tank.

Optionally, in the further improved water softening structure, a height-to-diameter ratio of the resin tank is 0.5-20.

Optionally, the further improved water softening structure further includes:
a flow limiting apparatus connected to an inlet or outlet of each water softening unit in the first-stage water softening unit group.

The present disclosure further provides a regeneration method for the water softening structure as described above, including the following steps:
S1) supplying inlet water to be softened into the water softening structure;
S2) collecting, by a controller, specified operation parameters, to calculate an adsorption amount of each water softening unit, and if a water softening unit has an adsorption amount greater than an adsorption threshold or working time longer than a time threshold, controlling a switching apparatus to disconnect the water softening unit so that the water softening unit enters regeneration,
where, the specified operation parameters include, but are not limited to, working flow rate, working time, a cumulative adsorption amount, hardness of water produced, hardness of inlet water; and the adsorption amount is calculated through an existing technical means; and
S3) if the regenerated water softening unit completes regeneration, the controller switches to connect in parallel the water softening unit to the other water softening unit group and to connect in parallel a water softening unit in the other water softening unit group to the water softening unit group that the regenerated water softening unit originally belongs to.

Optionally, in the further improved regeneration method, during implementation of step S3), the water softening unit having a minimum adsorption amount or shortest working time is selected from the other water softening unit group and connected in parallel to the water softening unit group to which the regenerated water softening unit originally belongs.

Optionally, in the further improved regeneration method, the inlet water hardness ranges from 50 mg/L to 2000 mg/L, an inlet water flow rate ranges from 0.01 m³/h to 9 m³/h, an inlet water temperature ranges from 4°C to 70°C, and the working time ranges from 10 min to 1500 min.

Optionally, in the further improved regeneration method, when the water softening unit starts regeneration, the switching apparatus is controlled to supply a regenerant with a concentration range of 1% - 26% and a flow rate range of 0.3×10⁻³ m³/h - 0.3 m³/h into the water softening unit to be regenerated, and regeneration time ranges from 1min to 300min.

Optionally, in the further improved regeneration method, the regenerant is liquid or solid salt.

Optionally, in the further improved method, the regeneration is counter-current or downflow one, that is, the regenerant is supplied in a direction opposite to that of the inlet water or the regenerant is supplied in a direction same as that of the inlet water.

A working exchange capacity of the water softening unit is affected by the operation condition. Particularly in a device with a small height-to-diameter ratio, full use of an exchange capacity of resin cannot be realized due to a hardness leakage of produced water. The present disclosure provides two stages of water softening unit groups, where a second-stage resin tank carries out further water softening. In the water softening structure of the present disclosure, a leakage of hardness of the water produced by the first-stage water softening unit group is allowed, so as to increase the working exchange capacity of the first-stage water softening unit group, and the working exchange capacity of resin of the second-stage water softening unit group is increased due to a reduction of hardness of inlet water, thereby increasing the working exchange capacity of the resin.

Compared with the prior art where resin tanks are connected in parallel, the present disclosure can significantly increase utilization rates of resin and regenerant while implementing a 24-hour ceaseless water supply, thereby greatly reducing a regeneration frequency of the device, reducing discharge of high-concentration brine during the regeneration and consumption of water resources, and at the same time, reducing electrical energy consumed by the device due to frequent regeneration. In addition, the present disclosure may further reduce a space occupied by the softening device, thereby saving the operation costs of the device.

### BRIEF DESCRIPTION OF THE DRAWINGS

The drawings of the present disclosure are intended to illustrate general characteristics of methods, structures and/or materials used in particular exemplary embodiments according to the present disclosure, to supplement the content in the description. However, the drawings of the present disclosure are schematic drawings that are not drawn to scale and thus may not accurately reflect the precise structure or performance characteristics of any given embodiment, and the drawings of the present disclosure should not be construed as limiting or restricting the scope of values or attributes encompassed by the exemplary embodiments according to the present disclosure. The present disclosure is further described in detail below with reference to the drawings and specific embodiments:
FIG. 1 is a schematic structural diagram of a structure 1) in the present disclosure.
FIG. 2 is a schematic structural diagram of a structure 2) in the present disclosure.
FIG. 3 is a schematic structural diagram of a structure 3) in the present disclosure.
FIG. 4 is a schematic structural diagram of a structure 4) in the present disclosure.
FIG. 5 is a schematic structural diagram of a structure 5) in the present disclosure.
FIG. 6 is a schematic structural diagram of a structure 6) in the present disclosure.
FIG. 7 is a schematic diagram I of a working principle of a structure 1) in the present disclosure.
FIG. 8 is a schematic diagram II of a working principle of a structure 1) in the present disclosure.
FIG. 9 is a schematic diagram I of a working principle of a structure 4) in the present disclosure.
FIG. 10 is a schematic diagram II of a working principle of a structure 4) in the present disclosure.

### DETAILED DESCRIPTION OF EMBODIMENTS

Embodiments of the present disclosure are described below using specific examples, and those skilled in the art could fully understand other advantages and technical effects of the present disclosure from the contents disclosed in the specification. The present disclosure can also be implemented or applied through different specific embodiments. Various details in the specification can also be applied based on different viewpoints and modified or changed without departing from the general design idea of the present disclosure. It should be noted that the embodiments below and features in the embodiments can be combined with each other without conflicts. The following exemplary embodiments of the present disclosure may be implemented in many different forms and should not be construed as being limited to the specific embodiments set forth herein. It should be understood that these embodiments are provided so that the present disclosure is thorough and complete. The technical solutions of these exemplary specific embodiments are fully conveyed to those skilled in the art. It should be understood that when an element is referred to as being "connected" or "combined" to another element, the element may be directly connected or combined to another element, or there may be an intermediate element. On the contrary, when the element is referred to as being "directly connected" or "directly combined" to another element, there is no intermediate element. Throughout the drawings, the same reference numeral always denotes the same element. As used herein, the term "and/or" includes any and all combinations of one or more of the relevant items listed.

### Embodiment 1

The present disclosure provides a water softening structure for a water softener, including:
a first-stage water softening unit group that includes A water softening units connected in parallel and that is connected in sequence to a second-stage water softening unit group, where A≥1;
the second-stage water softening unit group including B water softening units connected in parallel, where B≥1;
a controller, which can control a switching apparatus to disconnect a water softening unit to be regenerated according to adsorption amounts of the water softening unit;
where the controller controls the switching apparatus to connect in parallel the regenerated water softening unit to the second-stage water softening unit group, and at the same time, controls to connect in parallel the water softening unit in the second-stage water softening unit group to the first-stage water softening unit group in parallel; and
the switching apparatus which is disposed at a general water inlet and connected to each water softening unit respectively, can control, according to a controller instruction, each water softening unit to be connected in parallel to or be disconnected from a certain water softening unit group, where the switching apparatus may be a multi-way switch valve; and
a regenerant source, connected to a salt absorption port of the switching apparatus, where all the water softening units simultaneously run and are separately regenerated.

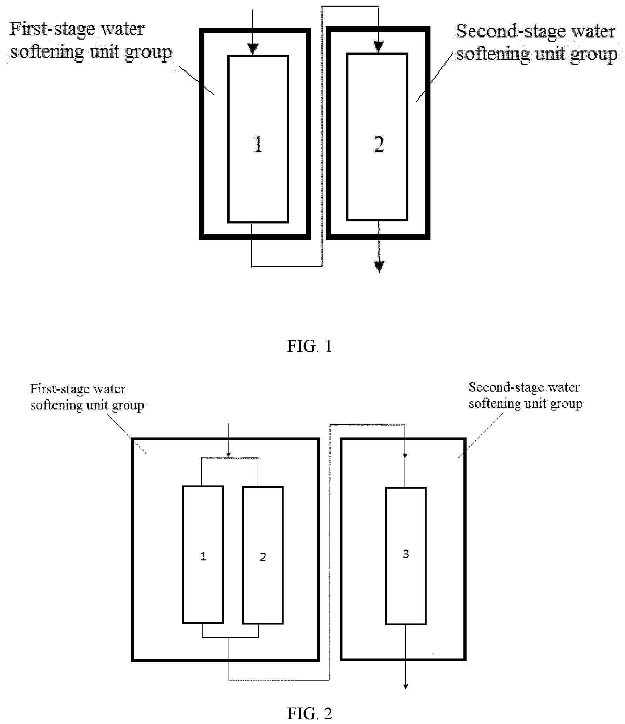

There are six structures in this embodiment:
For a structure 1), as shown in FIG. 1, when A=B=1, the first-stage water softening unit group and the second-stage water softening unit group each have only one water softening unit. The first-stage water softening unit group and the second-stage water softening unit group form a connection-sequence structure.

For a structure 2), as shown in FIG. 2, when A>B=1, the first-stage water softening unit group has at least two water softening units, and the second-stage water softening unit group has one water softening unit. The first-stage water softening unit group and the second-stage water softening unit group form a connection-sequence structure.

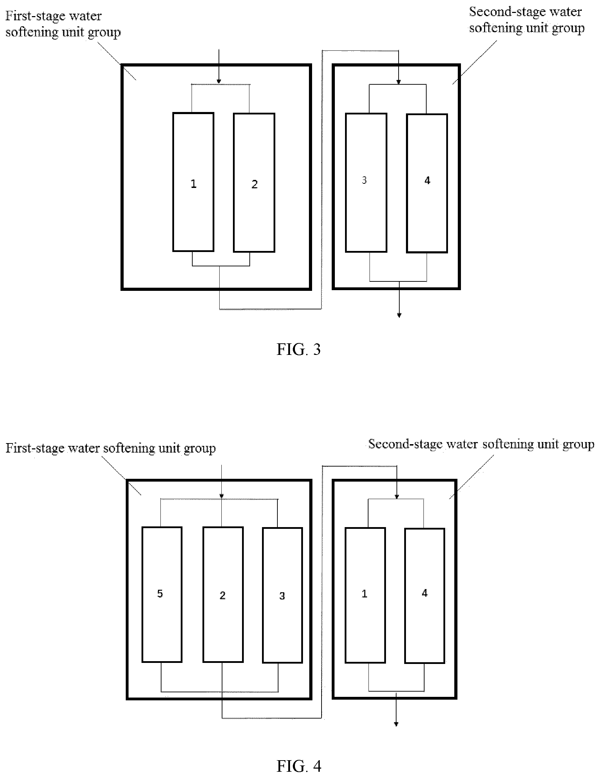

For a structure 3), as shown in FIG. 3, when A≥B>1, the first-stage water softening unit group and the second-stage water softening unit group each have at least two water softening units.

For a structure 4), as shown in FIG. 4, when A>B>1, the first-stage water softening unit group has at least three water softening units, and the second-stage water softening unit group has at least two water softening units.

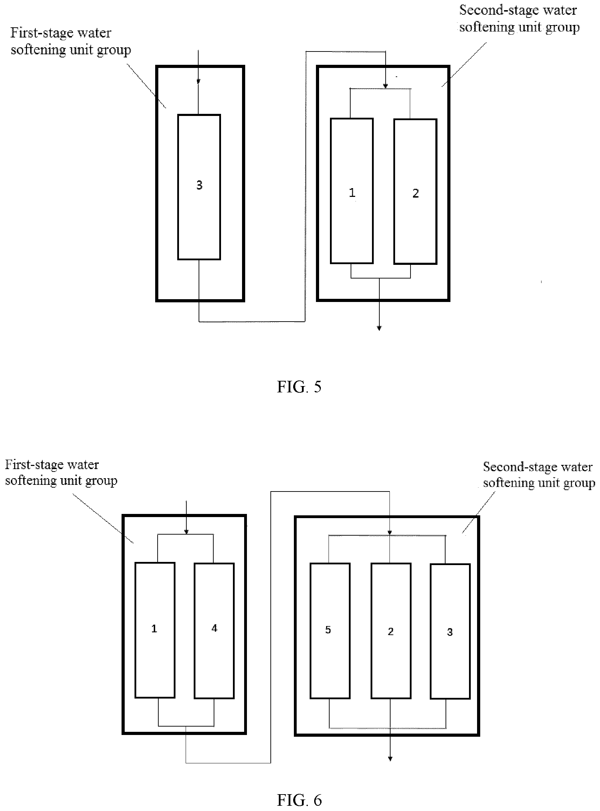

For a structure 5): as shown in FIG. 5, when 1=A<B, the first-stage water softening unit group has one water softening unit and, the second-stage water softening unit group has at least two water softening units. The first-stage water softening unit group and the second-stage water softening unit group form a connection-sequence structure.

For a structure 6): as shown in FIG. 6, when 1<A<B, the first-stage water softening unit group has at least two water softening units, and the second-stage water softening unit group has at least three water softening units. The first-stage water softening unit group and the second-stage water softening unit group form a connection-sequence structure.

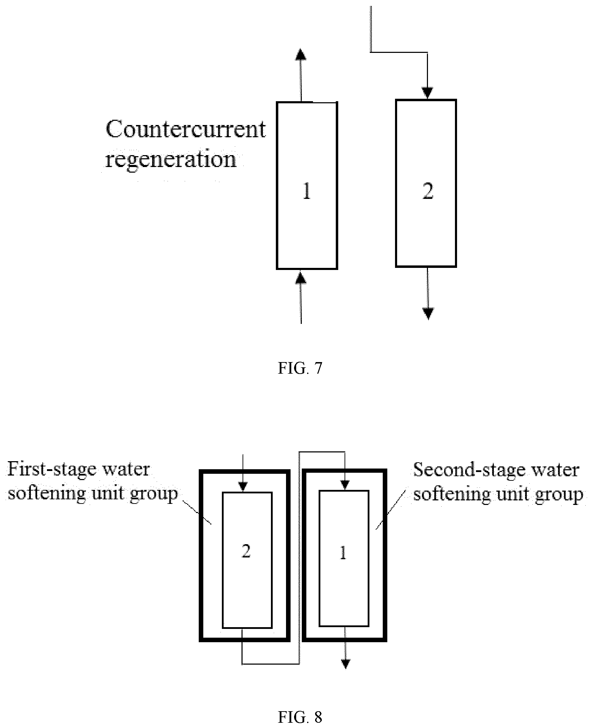

With reference to FIGS. 1, 7, and 8, exemplarily, a working process of the first embodiment is illustrated as follows by taking the structure 1) as an example:

Tap water with hardness of 400 mg/L is flowed through a flow limiting apparatus at a flow rate of 1.8 m³/h into the first-stage water softening unit group, i.e., a resin tank 1, and the second-stage water softening unit group, i.e., a resin tank 2, which are connected in sequence, so as to soften the water with high hardness.

After run for a period of time, the resin tank 1 is regenerated (a control valve controls switching and disconnection). At this time, the resin tank 2 completes a softening process for water with high hardness, in which case a hardness removal rate for the tap water reaches 99.5%. A regeneration process is counter-current regeneration (or downflow regeneration). A regenerant with a concentration range of 1% - 26% is supplied at a flow rate in a range of 3.0×10⁻³ m³/h to 0.1 m³/h (in a direction opposite to or the same as a direction of the softening process). Regeneration time is in a range of 1 min - 200 min. The regeneration of the resin tank 1 ends. The resin restores softening performance. A pipeline is controlled and switched by the switching apparatus. At this time, the resin tank 1 and the resin tank 2 are still connected in sequence. However, a flow direction of inlet water is changed as a direction of entering the resin tank 2 first and then entering the resin tank 1. That is, the resin tank 1 belonging to the first-stage water softening unit group is changed to the resin tank 1 belonging to the second-stage water softening unit group. The resin tank 2 belonging to the second-stage water softening unit group is changed to the resin tank 2 belonging to the first-stage water softening unit group. The softening process for the tap water with high hardness continues.

After the water softener runs for a period of time, a regeneration process of the resin tank 2 is carried out, At this time, the resin tank 1 completes the softening process for water with high hardness. After the regeneration of the resin tank 2 ends, the resin restores the adsorption performance. The pipeline is controlled and switched by the switching apparatus. At this time, the resin tank 2 and resin tank 1 are still connected in sequence. An initial working state is returned. That is, the resin tank 1 belongs to the first-stage water softening unit group, and the resin tank 2 belongs to the second-stage water softening unit group. The two tanks cycle a "softening-regeneration-softening" process, to continuously soften the tap water with high hardness. A working exchange capacity of the resin is improved by 60%.

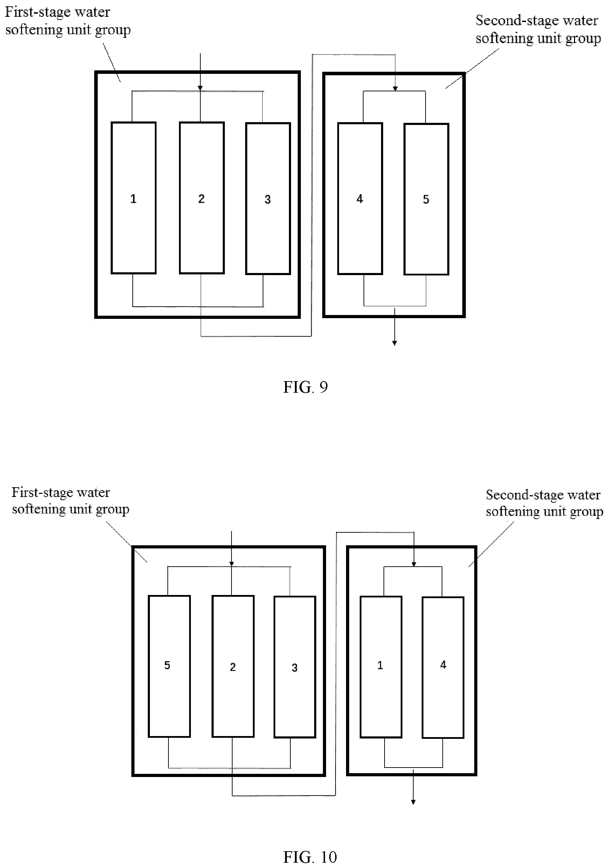

As shown in FIGS. 9 and 10, exemplarily, a working process of Embodiment 1 is described as follows by taking the structure 4) as an example: The first-stage water softening unit group has three resin tanks: the resin tank 1, the resin tank 2, and a resin tank 3, and the second-stage water softening unit group has two resin tanks: a resin tank 4 and a resin tank 5.

Tap water with hardness of 600 mg/L is supplied at a flow rate of 3.0 m³/h through the first-stage water softening unit group and the second-stage water softening unit group connected in sequence, to complete the softening process for the tap water with high hardness. After water is softened for a period of time, a regeneration process for the resin tank 1 needs to be carried out. At this time, the pipeline is switched by the switching apparatus to disconnect the resin tank 1. The resin tank 2 and the resin tank 3 are kept to be connected in parallel to form the first-stage water softening unit group. The second-stage water softening unit group is kept unchanged. When the resin tank 1 is regenerated, a regenerant with a concentration range of 1% - 26% is supplied from the bottom of the resin tank at a flow rate in a range of 3.0×10-³ m³/h - 0.1 m³/h. Regeneration time is in a range of 1 min - 200 min. When the regeneration of the resin tank 1 ends, the pipeline is switched by the switching apparatus, so that the resin tank 1 is connected in parallel to the second-stage water softening unit group. At the same time, the controller controls the switching apparatus to switch the pipeline, so that the resin tank 5 with a minimum adsorption amount or shortest working time (exemplarily) is disconnected from being connected in parallel to the resin tank 4 and connects in parallel the resin tank 5 to the resin tank 2 and the resin tank 3. That is, the resin tank 5 is transferred to the first-stage water softening unit group, and the regenerated resin tank 1 is transferred to the second-stage water softening unit group. By parity of reasoning, the above "regeneration-softening" process is performed sequentially. The five tanks simultaneously run, are separately regenerated, and cycle the "softening-regeneration-softening" process, which has a large flow rate and ensures that the water softener continuously provides soft water. The working exchange capacity of the resin is improved by 50%, achieving the objective of saving salt and water, and improving economic efficiency.

Optionally, in the further improved Embodiment 1, the second-stage water softening unit group is used for supplemental softening of hardness leakage from the first-stage water softening unit group, and the number of water softening units in the second-stage water softening unit group is configured on the basis of a water production condition of the first-stage water softening unit group.

Optionally, in the further improved Embodiment 1, the first-stage water softening unit group is used for pretreating inlet water with high hardness. The second-stage water softening unit group is used for softening the inlet water. The number of the water softening units in the first-stage water softening unit group is configured on the basis of an inlet water situation.

Optionally, in the further improved Embodiment 1, a height-to-diameter ratio of the resin tank is in a range of 0.5-20.

### Embodiment 2

A further improvement is performed based on the above Embodiment 1. The same parts are not repeated here. A water softening structure further includes:
a flow limiting apparatus, connected to an inlet or outlet of each water softening unit in a first-stage water softening unit group.

### Embodiment 3

The present disclosure provides a regeneration method for a water softening structure according to any one of Embodiment 1 and Embodiment 2, including the following steps:
S1) supplying inlet water to be softened into the water softening structure;
S2) collecting, by a controller, specified operation parameters, to calculate adsorption amounts of each water softening unit, and if a certain water softening unit has an adsorption amount greater than an adsorption threshold or working time longer than a time threshold, controlling a switching apparatus to disconnect the water softening unit so that the water softening unit enters regeneration; and
S3) if the regenerated water softening unit completes regeneration, controlling, by the controller, the switching apparatus to connect in parallel the water softening unit to the other water softening unit group and to connect a certain water softening unit in the other water softening unit group to the water softening unit group to which the regenerated water softening unit originally belongs.

### Embodiment 4

The present disclosure provides a regeneration method for a water softening structure according to any one of Embodiment 1 and Embodiment 2, including the following steps:
S1) supplying inlet water to be softened into the water softening structure;
S2) collecting, by a controller, specified operation parameters, to calculate adsorption amounts of each water softening unit, and if a certain water softening unit has an adsorption amount greater than an adsorption threshold or working time longer than a time threshold, controlling a switching apparatus to disconnect the water softening unit so that the water softening unit enters regeneration; and
S3) if the regenerated water softening unit completes regeneration, controlling, by the controller, the switching apparatus to connect in parallel the water softening unit to the other water softening unit group and connect in parallel a certain water softening unit in the other water softening unit group to the water softening unit group to which the regenerated water softening unit originally belongs.

During implementation of step S3), the water softening unit with a minimum adsorption amount or shortest working time may be selected from the other water softening unit group to be connected in parallel to the water softening unit group to which the regenerated water softening unit originally belongs.

### Embodiment 5

The present disclosure provides a regeneration method for a water softening structure according to any one of Embodiment 1 and Embodiment 2, including the following steps:
S1) supplying inlet water to be softened into the water softening structure;
S2) collecting, by a controller, specified operation parameters, to calculate adsorption amounts of each water softening unit, and if a certain water softening unit has an adsorption amount greater than an adsorption threshold or working time longer than a time threshold, controlling a switching apparatus to disconnect the water softening unit so that the water softening unit enters regeneration; and
S3) if the regenerated water softening unit completes regeneration, controlling, by the controller, the switching apparatus to connect in parallel the water softening unit to the other water softening unit group and connect a water softening unit with a minimum adsorption amount or shortest working time in the other water softening unit group to the water softening unit group to which the regenerated water softening unit originally belongs.

The hardness of inlet water is in a range of 50 mg/L - 2000 mg/L. A flow rate of the inlet water is in a range of 0.01 m³/h - 9 m³/h. A temperature of the inlet water is in a range of 4°C - 70°C. A time threshold is in a range of 10 min - 1500 min. When the water softening unit enters regeneration, the switching apparatus is controlled to supply a regenerant with a concentration range of 1% - 26% and a flow rate in a range of 1.0×10⁻³ m³/h - 0.3 m³/h into the water softening unit to be regenerated. Regeneration time is in a range of 1 min - 200 min. The regenerant is a liquid or solid salt, preferably the solid salt, to facilitate storage and reduce the size of a salt box.

Unless otherwise defined, all terms (including technical and scientific terms) used herein have the same meanings as those commonly understood by those skilled in the art to which the present disclosure pertains. It will also be understood that, unless expressly defined herein, the terms such as those defined in general-purpose dictionaries should be construed as having meanings consistent with their meanings in the context of the relevant field, and are not construed in an ideal or overly formal sense.

The present disclosure is described in detail above through specific implementations and embodiments that, however, do not impose limitations to the present disclosure. Without departing from the principle of the present disclosure, those skilled in the art may also make many other deformations and improvements, which should also be considered as the scope of protection of the present disclosure.

## Claims

1. A water softening structure, comprising:
a first-stage water softening unit group that comprises A water softening units connected in parallel and that is connected in sequence to a second-stage water softening unit group,
wherein A≥1;
the second-stage water softening unit group comprising B water softening units connected in parallel, wherein B≥1;
a controller, which can control a switching apparatus to disconnect a certain water softening unit needing to be regenerated according to adsorption amounts of the water softening units;
wherein the control switching apparatus connects in parallel a regenerated water softening unit to the second-stage water softening unit group, and at the same time, controls to connect in parallel a certain water softening unit in the second-stage water softening unit group to the first-stage water softening unit group; and
the switching apparatus, which is disposed at a general water inlet and connected to each water softening unit respectively, can control, according to a controller instruction, each water softening unit to be connected in parallel to or be disconnected from a certain water softening unit group;
wherein all the water softening units simultaneously run and are separately regenerated.

2. The water softening structure according to claim 1, wherein the second-stage water softening unit group is used for supplemental softening for hardness leakage from the first-stage water softening unit group, and the number of water softening units in the second-stage water softening unit group is configured on the basis of a water production situation of the first-stage water softening unit group.

3. The water softening structure according to claim 1, wherein the first-stage water softening unit group is used for pretreating inlet water with high hardness, the second-stage water softening unit group is used for softening the inlet water, and the number of the water softening units in the first-stage water softening unit group is configured on the basis of an inlet water situation.

4. The water softening structure according to claim 1, wherein the water softening unit is a resin tank.

5. The water softening structure according to claim 1, wherein a height-to-diameter ratio of the resin tank is in a range of 0.5-20.

6. The water softening structure according to claim 1, further comprising:
a flow limiting apparatus, connected to an inlet or outlet of each water softening unit in the first-stage water softening unit group.

7. A regeneration method for the water softening structure according to any one of claims 1-6, comprising the following steps:
S1) supplying inlet water to be softened into the water softening structure;
S2) collecting, by a controller, specified operation parameters, to calculate adsorption amounts of each water softening unit, and if a certain water softening unit in the first-stage water softening unit group has an adsorption amount greater than an adsorption threshold or working time longer than a time threshold, controlling a switching apparatus to disconnect the water softening unit, so that the water softening unit enters regeneration;
and
S3) if the regenerated water softening unit completes regeneration, controlling, by the controller, the switching apparatus to connect in parallel the water softening unit to the other water softening unit group and connect in parallel a water softening unit in the other water softening unit group to the water softening unit group to which the regenerated water softening unit originally belongs.

8. The regeneration method according to claim 7, wherein during implementation of step S3), the water softening unit with a minimum adsorption amount or shortest working time is selected from the other water softening unit group to be connected in parallel to the water softening unit group to which the regenerated water softening unit originally belongs.

9. The regeneration method according to claim 7, wherein when the water softening unit enters regeneration, a regenerant with a concentration range of 1% -26% and a flow rate range of 0.3×10⁻³ m³/h - 0.3 m³/h is supplied to the regenerated water softening unit through the switching apparatus, and regeneration time is in a range of 1min - 300min.

10. The regeneration method according to claim 9, wherein the regenerant is a liquid or solid salt.

11. The regeneration method according to claim 7, wherein regeneration adopts counter-current regeneration or downflow regeneration.
